(19) **Europäisches Patentamt / European Patent Office / Office européen des brevets**

(11) **EP 4 080 825 B1**

(12) **EUROPEAN PATENT SPECIFICATION**

(45) Date of publication and mention of the grant of the patent:
**01.04.2026 Bulletin 2026/14**

(21) Application number: **20903259.8**

(22) Date of filing: **17.12.2020**

(51) International Patent Classification (IPC):
**H04L 41/0823** *(2022.01)*   H04L 41/0813 *(2022.01)*
**H04L 43/08** *(2022.01)*   H04L 41/00 *(2022.01)*

(52) Cooperative Patent Classification (CPC):
**H04L 41/0823; H04L 41/00;** H04L 41/0813;
H04L 43/08; Y02D 30/70

(86) International application number:
**PCT/CN2020/137301**

(87) International publication number:
**WO 2021/121336 (24.06.2021 Gazette 2021/25)**

(54) **THRESHOLD OPTIMIZATION METHOD AND APPARATUS APPLIED TO COMMUNICATIONS SYSTEM, AND COMPUTER READABLE MEDIUM**

VERFAHREN UND VORRICHTUNG ZUR SCHWELLENOPTIMIERUNG FÜR EIN KOMMUNIKATIONSSYSTEM UND COMPUTERLESBARES MEDIUM

PROCÉDÉ ET APPAREIL D'OPTIMISATION DE SEUIL APPLIQUÉS À UN SYSTÈME DE COMMUNICATION ET SUPPORT LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2019   CN 201911330491**

(43) Date of publication of application:
**26.10.2022   Bulletin 2022/43**

(73) Proprietor: **ZTE Corporation**
**Shenzhen, Guangdong 518057 (CN)**

(72) Inventors:
• **WANG, Yongcheng**
  **Shenzhen, Guangdong 518057 (CN)**
• **LI, Weiqing**
  **Shenzhen, Guangdong 518057 (CN)**

• **HAN, Bingtao**
  **Shenzhen, Guangdong 518057 (CN)**

(74) Representative: **Ipsilon**
**12 Avenue d'Italie**
**75013 Paris (FR)**

(56) References cited:
WO-A1-2016/004062   CN-A- 1 276 110
CN-A- 108 205 683   CN-A- 108 228 377
JP-A- 2006 287 601   US-A1- 2016 165 469
US-A1- 2018 330 250   US-A1- 2019 266 513

• "AI in Network        Use Cases in China", GSM ASSOCIATION, GSM ASSOCIATION, GSMA FLOOR2 THE WALBROOK BUILDING 25 WALLBROOK LONDON, UK, 23 October 2019 (2019-10-23), XP040720867

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNIC FIELD

The disclosure relates to the technical field of communication, and more particularly to a threshold optimization method for a communication system, a threshold optimization device for the communication system, and a computer-readable medium.

## BACKGROUND

In communication systems, due to high complexity of the system, global optimal solutions or even local optimal solutions for thresholds of multiple configuration parameters cannot be obtained through theoretical derivation and simulation, and merely some general solutions for the thresholds may be obtained according to human experience. However, according to the actual situation, the thresholds should be different in different environments. Therefore, it is unreasonable to set each threshold to be a fixed value according to the human experience, and it is difficult to calibrate each threshold manually according to the actual situation during system operation.
Document US 2016/165469 A1 relates a method and apparatus for determining cell states to adjust antenna configuration parameters. Document JP 2006 287601 A relates to a mobile communication system that can reduce control latency between terminals and base stations and enable high-speed wireless communication.

## SUMMARY

The disclosure aims to solve at least one of the technical problems in existing art, and provides a threshold optimization method for a communication system, a threshold optimization device for the communication system, and a computer-readable medium.
To this end, according to a first aspect, embodiments of the disclosure provide a threshold optimization method for a communication system. The method includes the following. In response to a start of a collection phase, following operations are performed at a preset time interval. A real-time value of each of multiple observation variables of the communication system is collected to obtain a set of collection data. When the real-time value of each of the multiple observation variables falls within a corresponding valid range, the communication system is controlled to perform a preset operation and a value of a key performance indicator of performing the preset operation by the communication system is acquired. Each of the multiple observation variables is configured with a corresponding judgment threshold, and a respective judgment threshold is used for dividing a range of a corresponding observation variable into a valid range and a non-valid range. The set of collection data is marked according to the value of the KPI. In response to an end of the collection phase, a judgment threshold configured for each of at least one of the multiple observation variables is adjusted according to marked collection data obtained in the collection phase; wherein marking the set of collection data according to the value of the KPI comprises:marking the set of collection data as a negative sample, in response to the value of the KPI being less than a preset indicator value; and marking the set of collection data as a positive sample, in response to the value of the KPI being greater than or equal to the preset indicator value.
According to a second aspect, embodiments of the disclosure provide a threshold optimization device for a communication system. The device includes at least one processor and a storage device configured to store one or more programs. The one or more programs, when executed by the at least one processor, cause the at least one processor to perform the method described above.
According to a third aspect, embodiments of the disclosure provide a computer-readable medium. The computer-readable medium stores computer programs. The computer programs, when executed by a processor, cause the processor to perform the method described above.

## BRIEF DESCRIPTION OF THE DRAWINGS

FIG. 1 is a flow chart illustrating a threshold optimization method for a communication system according to embodiments of the disclosure.
FIG. 2 is a flow chart illustrating a threshold optimization method for a communication system according to other embodiments of the disclosure.
FIG. 3a is a flow chart illustrating a threshold optimization method for a communication system according to other embodiments of the disclosure.
FIG. 3b is an exemplary schematic diagram illustrating a decision tree involved in operations at S00.
FIG. 4 is a flow chart illustrating a threshold optimization method for a communication system according to other embodiments of the disclosure.
FIG. 5 is a schematic flow chart illustrating an exemplary implementation manner of S401b according to other embodiments of the disclosure.
FIG. 6 is a schematic flow chart illustrating an exemplary implementation manner of S402b according to other embodiments of the disclosure.

## DETAILED DESCRIPTION OF THE EMBODIMENTS

To enable those skilled in the art to better understand technical schemes of the disclosure, the following describes a threshold optimization method for a communication system, a threshold optimization device for the communication system, and a computer-readable medium provided in the disclosure in detail below in combination with the accompanying drawings.

Exemplary embodiments will be described more fully below with reference to the accompanying drawings, but the exemplary embodiments may be embodied in different forms and should not be interpreted as being limited to the embodiments set forth herein. Instead, these embodiments are provided to make the disclosure thorough and complete and enable those skilled in the art to fully understand the scope of the disclosure.

Terms used herein are merely used for describing specific embodiments and are not intended to limit the disclosure. As used herein, the singular forms "a" and "the" are also intended to include the plural, unless the context clearly indicates otherwise. It will also be understood that when used in this specification, the terms "comprising/including" and/or "made of" designate the presence of features, integrity, steps, operations, elements, and/or components, but do not exclude the presence or addition of one or more other features, integrity, steps, operations, elements, components, and/or groups thereof.

It can be understood that although terms "first", "second" etc. may be used herein to describe various elements, these elements should not be limited by these terms. These terms are used only to distinguish one component from another. Thus, a first element, a first component, or a first module discussed below may also be referred to as a second element, a second component, or a second module without departing from the teachings of the disclosure.

Unless otherwise limited, all terms (including technical and scientific terms) used herein have the same meaning as would normally be understood by those of ordinary skill in the art. It can also be understood that terms such as those defined in commonly used dictionaries should be construed as having meanings consistent with their meanings in the context of the related art and the disclosure, and will not be construed as having idealized or over-formal meanings unless expressly so defined herein.

The threshold optimization method and device for the communication system provided in the disclosure can be used for on-line optimization and adjustment of a judgment threshold configured for each observation variable according to real-time values of the observation variable.

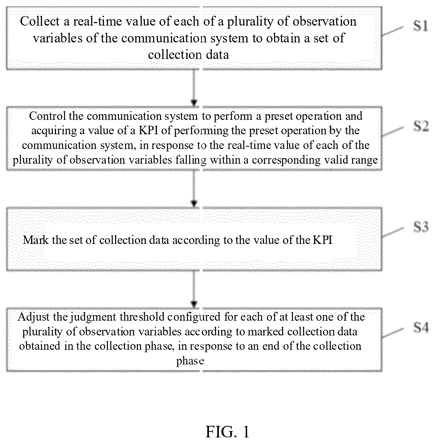

FIG. 1 is a flow chart illustrating a threshold optimization method for a communication system according to embodiments of the disclosure. As illustrated in FIG. 1, the method includes following operations.

In response to a start of a collection phase, following operations at S1 to S3 are performed at a preset time interval.

At S1, a real-time value of each of multiple observation variables of the communication system is collected to obtain a set of collection data.

In some embodiments, the real-time value of each observation variable may be directly used as the set of collection data, such as, the number of users, a signal strength, and a delay, and the like. Alternatively, a corresponding calculation may be performed on the real-time value of each observation variable, and then a calculation result obtained may be used as the set of collection data, such as, a utilization rate, a load rate, and a lag rate, and the like.

At S2, in response to the real-time value of each of the multiple observation variables falling within a corresponding valid range, the communication system is controlled to perform a preset operation and a value of a key performance indicator (KPI) of performing the preset operation by the communication system is acquired.

In operations at S2, each observation variable is configured with a corresponding judgment threshold, and a respective judgment threshold is used for dividing a range of a corresponding observation variable into a valid range and a non-valid range.

The KPI is used for measuring a current communication network status and a communication system running status, which may include radio resource characteristics, system resource characteristics, or transmission characteristics, or the like.

In some embodiments, the respective judgment threshold configured for the corresponding observation variable may be represented in the form of level and threshold, and can be adjusted according to a change of a scenario.

At S3, the set of collection data is marked according to the value of the KPI.

At S4, in response to an end of the collection phase, the judgment threshold configured for each of at least one of the multiple observation variables is adjusted according to marked collection data obtained in the collection phase.

In some embodiments, adjustment may be made according to the number of total samples in the marked collection data (all marking results), a ratio of the number of positive samples to the number of the total samples, a ratio of the number of negative samples to the number of the total samples, a density of the positive samples in a time domain, and a density of the negative samples in the time domain, and the like.

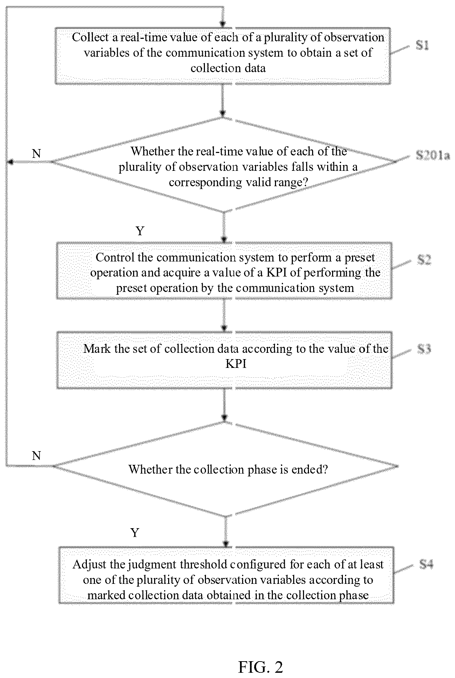

FIG. 2 is a flow chart illustrating a threshold optimization method for a communication system according to other embodiments of the disclosure. The method in FIG. 2 is an exemplary embodiment based on the method illustrated in FIG. 1. As illustrated in FIG. 2, the method includes following operations.

In response to a start of a collection phase, following operations may be performed at a preset time interval.

At S1, a real-time value of each of multiple observation variables of the communication system is collected to obtain a set of collection data.

At S201a, whether the real-time value of each of the multiple observation variables falls within a corresponding valid range is determined.

In operations at S201a, when it is determined that the real-time value of each of the multiple observation variables falls within the corresponding valid range, proceed to operations at S2. When it is determined that not all real-time values are within corresponding valid ranges, proceed to operations at S1 in a next preset time interval, i.e., proceed to collecting the real-time value of each of the multiple observation variables of the communication system.

At S2, the communication system is controlled to perform a preset operation and a value of a KPI of performing the preset operation by the communication system is acquired.

At S3, the set of collection data is marked according to the value of the KPI.

After operations at S3 are performed, a current state of the collection phase is determined, to determine whether the collection phase is ended. When it is determined that the collection phase is ended, proceed to operations at S4. When it is determined that the collection phase is not finished, proceed to the operations at S1 in another next preset time interval, i.e., proceed to collecting the real-time value of each of the multiple observation variables of the communication system.

In some embodiments, whether the collection phase is ended is determined according to the number of sets of collection data, the number of samples of a particular type, and a preset time limit of the collection phase.

At S4, the judgment threshold configured for each of at least one of the multiple observation variables is adjusted according to marked collection data obtained in the collection phase.

Embodiments of the disclosure provides a threshold optimization method for the communication system. The method can be used to evaluate and mark the real-time value of each observation variable according to the obtained value of each KPI after the system performs the preset operation, and then intelligently optimize and adjust the judgment threshold configured for each observation variable according to the marked collection data.

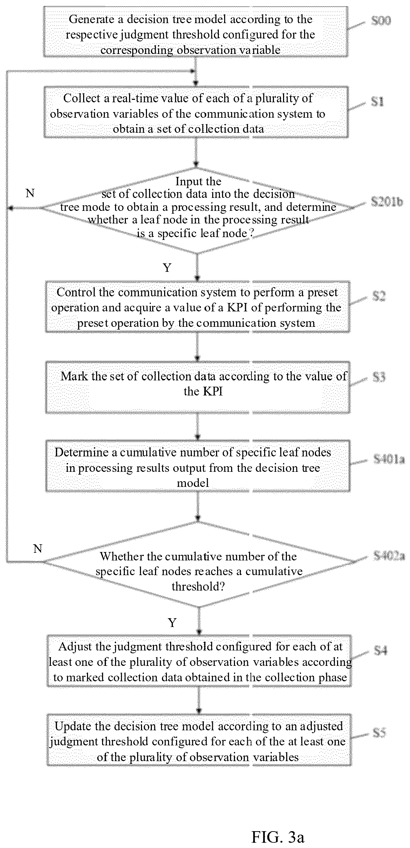

FIG. 3a is a flow chart illustrating a threshold optimization method for a communication system according to other embodiments of the disclosure. The method in FIG. 3a is an exemplary embodiment based on the method illustrated in FIG. 2. As illustrated in FIG. 3a, the method begins at S00.

At S00, a decision tree model is generated according to the respective judgment threshold configured for the corresponding observation variable.

A decision tree in the decision tree model includes: multiple non-leaf nodes distributed in at least one layer, and leaf nodes located at a lowest layer of the decision tree. All non-leaf nodes in a same layer of the at least one layer correspond to a same observation variable, a respective non-leaf node of the multiple non-leaf nodes is configured with two branches according to the judgment threshold corresponding to an observation variable corresponding to the respective non-leaf node, one of the two branches corresponds to the valid range of the one observation variable corresponding to the respective non-leaf node, and another of the two branches correspond to the non-valid range of the one observation variable corresponding to the respective non-leaf node.

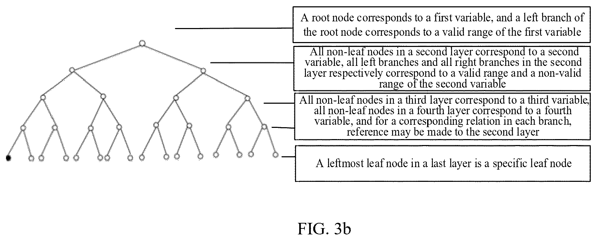

FIG. 3b is an exemplary schematic diagram illustrating a decision tree involved in operations at S00. As illustrated in FIG. 3b, the decision tree has five layers. A non-leaf node in a first layer corresponds to a first variable, two non-leaf nodes in a second layer correspond to a second variable, all non-leaf nodes in a third layer correspond to a third variable, and all non-leaf nodes in a fourth layer correspond to a fourth variable. For each non-leaf node, a left branch of the non-leaf node corresponds to the valid range of the observation variable corresponding to the non-leaf node, and a right branch of the non-leaf node corresponds to the non-valid range of the observation variable. A leftmost leaf node in a last layer is a specific leaf node involved in following operations.

In response to a start of a collection phase, following operations are performed at a preset time interval.

At S1, a real-time value of each of multiple observation variables of the communication system is collected to obtain a set of collection data.

At S201b, the set of collection data are inputted into the decision tree mode for processing to obtain a processing result, and whether a leaf node in the processing result is a specific leaf node is determined.

The specific leaf node is a leaf node on a path covering a branch corresponding to the valid range of each of the multiple observation variables.

In some embodiments, the specific leaf node may be configured with a different node identity than other leaf nodes for distinguishing.

In operations at S201b, when the leaf node in the processing result is the specific leaf node, it is determined that the real-time value of each of the multiple observation variables falls within the corresponding valid range, and according to the determination result, following operations at S2 is performed. When the leaf node in the processing result is not the specific leaf node, it is determined that not all the real-time values fall within corresponding valid ranges, and then the operations at S1 are continued to be performed in a subsequent preset time interval, i.e., proceed to collecting the real-time value of each of the multiple observation variables of the communication system.

At S2, the communication system is controlled to perform a preset operation and a value of a KPI of performing the preset operation by the communication system is acquired.

At S3, the set of collection data is marked according to the value of the KPI.

At S401a, a cumulative number of specific leaf nodes in processing results output from the decision tree model is determined.

In operations at S401a, the cumulative number of the specific leaf nodes in the processing results output from the decision tree model is determined. That is, the number of samples (i.e., positive samples and negative samples) falling into the specific leaf nodes is determined.

At S402a, whether the cumulative number of the specific leaf nodes reaches a cumulative threshold is determined.

The cumulative threshold is a leaf node stability threshold.

In operations at S402a, when the cumulative number of the specific leaf nodes reaches the cumulative threshold, it is determined that the collection phase is ended, and the operations at S4 may be performed. When the cumulative number of the specific leaf nodes does not reach the cumulative threshold, it indicates that the collection phase is not ended, and proceed to performing the operations at S1 in the subsequent preset time interval, i.e., proceed to collecting the real-time value of each of the multiple observation variables of the communication system.

At S4, the judgment threshold of each of at least one of the multiple observation variables is adjusted according to marked collection data obtained in the collection phase.

In some embodiments, optimizing and adjusting of the judgment threshold can be performed correspondingly in the decision tree model, for example, the optimizing and adjusting can be performed in the form of splitting of the non-leaf nodes.

At S5, the decision tree model is updated according to an adjusted judgment threshold configured for each of the at least one of the multiple observation variables.

In operations at S5, the decision tree model is updated according to the judgment threshold adjusted configured for each of the at least one of the multiple observation variables. That is, on the premise that the specific leaf node and the path of the specific leaf node remain unchanged, the judgment threshold corresponding to each non-leaf node is updated.

Embodiments of the disclosure provide a threshold optimization method for the communication system. The method can be used for refining the collection data marking process and the state judgment process of the collection phase by establishing the decision tree model, thereby strengthening the logicality and internal relation of the collection data marking process.

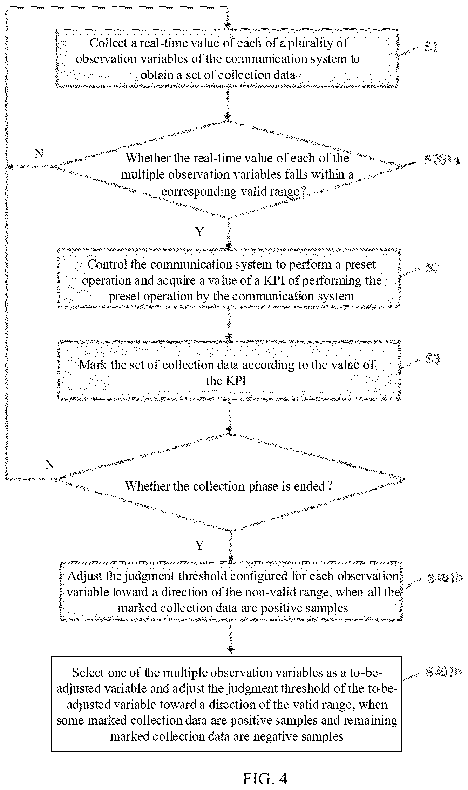

FIG. 4 is a flow chart illustrating a threshold optimization method for a communication system according to other embodiments of the disclosure. The method in FIG. 4 is an exemplary embodiment based on the method illustrated in FIG. 2. As illustrated in FIG. 4, in one example, in operations at S3, when the value of the KPI is less than a preset indicator value, the set of collection data is marked as a negative sample; otherwise, the set of collection data is marked as a positive sample. In addition to operations at S1 to S3, the method further includes operations at S401b and S402b. The operations at S401b and S402b are exemplary implementation manners for realizing the above operations at S4. The following merely describes operations at S401B and S402B in detail.

At S401b, when all the marked collection data are positive samples, the judgment threshold configured for each observation variable is adjusted toward a direction of the non-valid range.

When all the collection data marked are the positive samples, it is indicated that configuration for the current judgment threshold is relatively good, reasonable, or strict. Therefore, the judgment threshold configured for each observation variable is adjusted toward the direction of the non-valid range, that is, the valid range of each observation variable is expanded.

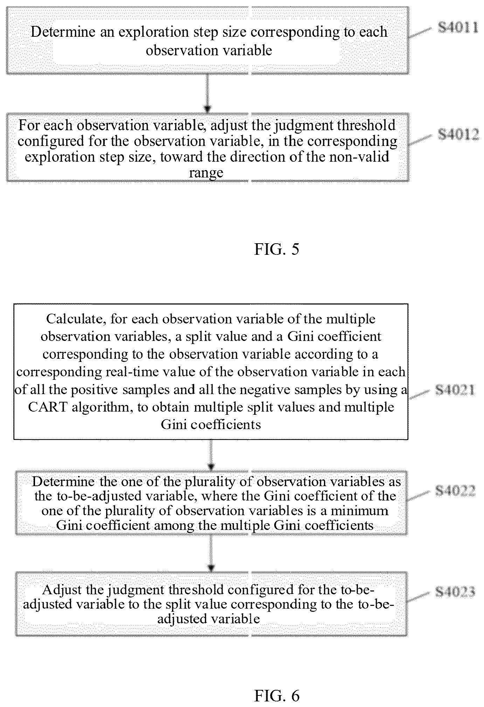

FIG. 5 is a schematic flow chart illustrating an exemplary implementation manner of S401b according to other embodiments of the disclosure. As illustrated in FIG. 5, in operations at S401b, the judgment threshold configured for each observation variable is adjusted toward the direction of the non-valid range, i.e., the operations at S401b include operations at S4011 and S4012.

At S4011, an exploration step size corresponding to each observation variable is determined.

In some embodiments, the exploration step size may be set as a fixed exploration step size or a dynamic exploration step size. The multiple observation variables may be configured with a same exploration step size or different exploration step sizes according to actual situations.

As an example, a fixed exploration step size may be configured for a base station energy-saving scenario. The communication system includes an energy-saving cell and an underlying coverage cell, and the preset operation performed by the communication system may include shielding the energy-saving cell. In this case, the multiple observation variables may include: an uplink load ratio of the energy-saving cell, a downlink load ratio of the energy-saving cell, a total uplink load ratio of dual cells, and a total downlink load ratio of the dual cells. The judgement thresholds respectively corresponding to the multiple observation variables may include: uplink load tolerance threshold t1 of the energy-saving cell, downlink load tolerance threshold t2 of the energy-saving cell, uplink load tolerance threshold t3 of the underlying coverage cell during energy saving, and downlink load tolerance threshold t4 of the underlying coverage cell during the energy saving. In one example, t1=0.2, t2=0.2, t3=0.65, and t4=0.7, and exploration step sizes len1=len2=len3=len4=0.05 may be set correspondingly.

As another example, a fixed exploration step size may be configured for an abnormal electric-energy-measurement diagnosis scenario. The communication system includes an electric-energy-measurement terminal, and the preset operation performed by the communication system may include reporting abnormal information. In this case, the multiple observation variables may include: a local phase-to-neutral voltage, a local phase current, and a duration. The judgement thresholds respectively corresponding to the multiple observation variables may include: a rated voltage U, a rated current V, and a time threshold H. In one example, u=0.8um, v=0.1vm, and h=1, and correspondingly, exploration step sizes $len_u=0.05$, $len_v=0.05$ and $len_n=0.1$ may be set.

At S4012, for each observation variable, the judgment threshold configured for the observation variable is adjusted, in the corresponding exploration step size, toward the direction of the non-valid range.

In one example, adjusting, in the corresponding exploration step size, the judgment threshold configured for the observation variable toward the direction of the non-valid range means that increasing or decreasing the judgment threshold according to the exploration step to expand the valid range of the observation variable.

At S402b, when some of the marked collection data are positive samples and remaining collection data marked are negative samples, one of the multiple observation variables is selected as a to-be-adjusted variable and the judgment threshold configured for the to-be-adjusted variable is adjusted toward a direction of the valid range.

When some marked collection data are the positive samples and the remaining marked collection data are the negative samples, it indicates that configuration of the current judgement threshold is relatively unreasonable and the valid range is relatively wide. The judgment threshold configured for the to-be-adjusted variable is adjusted toward the direction of the valid range, that is, the valid range of the to-be-adjusted variable may be reduced.

It can be understood that different from the case where all the marked collection data are the positive samples, when some marked collection data are the positive samples and the remaining marked collection data are the negative samples, the judgment threshold of only one of the observation variables is optimized and adjusted.

When all the collection data marked are the positive samples, adjusting the judgement threshold of each observation variable is to idealize the configuration of the judgement threshold, i.e., avoid over-fitting on the premise that each judgment threshold is relatively reasonable. When some marked collection data are the positive samples and the remaining marked collection data are the negative samples, only adjusting the judgment threshold of one observation variable is to rationalize the configuration of the judgment threshold. That is, on the premise that not all the judgment thresholds are reasonable, the judgment threshold with the worst stability is selected for individual optimization to improve the overall rationality.

In addition, when all the marked collection data are negative samples, it indicates that deviation between an initial configuration of the judgment threshold and an ideal configuration of the judgment threshold is relatively large. In this case, a judgment threshold configurator can be prompted to adjust the judgment threshold in a relatively large range.

FIG. 6 is a schematic flow chart illustrating an exemplary implementation manner of S402b according to other embodiments of the disclosure. As illustrated in FIG. 6, in operations at S402b, one of the multiple observation variables is selected as a to-be-adjusted variable, and the judgment threshold configured for the to-be-adjusted variable is optimized and adjusted. The operations at S402b include operations at S4021 to S4023.

At S4021, for each observation variable, a split value and a Gini coefficient that correspond to the observation variable are calculated according to a corresponding real-time value of the observation variable in each of all the positive samples and all the negative samples by using a classification and regression tree (CART) algorithm.

For each observation variable, real-time values of the observation variable in all the positive samples and all the negative samples are sorted in ascending order. A mean value of each two adjacent real-time values is calculated to obtain multiple mean values, and a Gini coefficient is calculated according to the real-time values of the observation variable and each of the multiple mean values to obtain multiple Gini coefficients. The mean value corresponding to the smallest Gini coefficient among the multiple Gini coefficients is determined as the split value corresponding to the observation variable, and the Gini coefficient corresponding to the split value is determined as the Gini coefficient corresponding to the observation variable.

At S4022, one of the multiple observation variables is determined as the to-be-adjusted variable, where the Gini coefficient of the one of the multiple observation variables is a minimum Gini coefficient among multiple Gini coefficients respectively corresponding to the multiple observation variables.

Referring to the illustration in operations at S402B, one observation variable with the smallest Gini coefficient among the multiple Gini coefficients is determined as the to-be-adjusted variable, that is, optimization and adjustment are made on the judgment threshold with the smallest stability.

At S4023, the judgment threshold of the to-be-adjusted variable is adjusted to the split value corresponding to the to-be-adjusted variable.

Embodiments of the disclosure provide a threshold optimization method for the communication system. The method can be used for carrying out corresponding small step size exploration for the relatively reasonable judgment threshold and maximizing the rationality of the unreasonable judgment threshold for the relatively unreasonable judgment threshold, according to the marked collection data.

The steps and flows of the threshold optimization method in the disclosure are described in detail in combination with practical scenarios. As an example, for a base station energy-saving scenario, the communication system includes an energy-saving cell and an underlying coverage cell, and the preset operation performed by the communication system includes shielding the energy-saving cell. The steps and flows of applying the threshold optimization method to the base station energy-saving scenario are as follows.

A decision tree model is generated according to the judgment threshold configured for each of multiple observation variables. The multiple observation variables may include: an uplink load ratio of the energy-saving cell, a downlink load ratio of the energy-saving cell, a total uplink load ratio of dual cells, and a total downlink load ratio of the dual cells. The judgement thresholds respectively corresponding to the multiple observation variables may include: uplink load tolerance threshold of the energy-saving cell, downlink load tolerance threshold of the energy-saving cell, uplink load tolerance threshold of the underlying coverage cell during energy saving, and downlink load tolerance threshold of the underlying coverage cell during the energy saving. The judgment thresholds may be configured according to experience. For the generation process of the exemplary decision tree model, reference may be made to the above embodiments, which will not be described herein.

After the decision tree model is generated, in response to the start of the collection phase, following operations may be performed at a preset time interval. A real-time value of each of the multiple observation variables is collected, to obtain set of collection data. The set of collection data are inputted into the decision tree model for processing, to obtain a processing result. Whether a leaf node in the processing result is a specific leaf node is determined. When the leaf node in the processing result is the specific leaf node, the energy-saving cell is controlled to be shielded, and a value of a KPI after the energy-saving cell is shielded is obtained. The set of collection data is marked according to the value of the KPI. If the value of the KPI is less than a preset indicator value, the set of collection data is marked as a negative sample; otherwise, the set of collection data is marked as a positive sample. The cumulative number of specific leaf nodes in processing results output from the decision tree model is determined, and whether the cumulative number of the specific leaf nodes reaches a cumulative threshold.

When it is determined that the cumulative number of the specific leaf nodes reaches the cumulative threshold, the collection data marked are obtained. When all the marked collection data are the positive samples, for each observation variable, an exploration step size corresponding to the observation variable in the collection phase is obtained by calculating according to an exploration step size corresponding to the observation variable in a previous collection phase and a step size coefficient corresponding to the observation variable in the collection phase.

In some embodiments, for each observation variable, the step size coefficient corresponding to the observation variable in the collection phase is calculated according to an uplink bandwidth of the underlying coverage cell, a maximum uplink load of the underlying coverage cell in response to the energy-saving cell being shielded in the previous collection phase, and the larger of two maximum uplink loads of the underlying coverage cell in response to the energy-saving cell being shielded in two collection phases previous to the collection phase.

As an example, the exploration step size corresponding to each observation variable in a current collection phase can be calculated according to the following formula:

$$L_i = L_i' * a_i \, ;$$

$$a_i = \begin{cases} b_i * \dfrac{B-M}{M-M'} & M > M' \\ 1 & M \leq M' \end{cases} \, .$$

$L_i$ represents an exploration step size corresponding to a i-th observation variable in the current collection phase, and $L_i'$ represents an exploration step size corresponding to the i-th observation variable in the previous collection phase, where an initial exploration step size may be set in advance. $a_i$ represents a step size coefficient corresponding to the i-th observation variable in the current collection phase. $b_i$ represents an adjustment coefficient pre-configured for the i-th observation variable, where $0 < b_i \leq 1$, the closer $b_i$ is to 1, the more radical $b_i$ is, and the adjustment coefficient may be set in advance. B represents an uplink bandwidth of the underlying coverage cell, $M$ represents a maximum uplink load of the underlying coverage cell when the energy-saving cell is shielded in the previous collection phase, and $M'$ represents the larger of the two maximum uplink loads of the underlying coverage cell when the energy-saving cell is shielded in the two collection phase previous to the collection phase. $i$ is an integer and $1 \leq i \leq N$, where $N$ represents the number of observation variables. For each observation variable, the judgment threshold configured for the observation variable is adjusted toward the direction of the non-valid range in the corresponding exploration step size.

When some marked collection data are positive samples and the remaining marked collection data are negative samples, for each observation variable, by using a CART algorithm, a split value and a Gini coefficient corresponding to the observation variable are calculated according to the corresponding real-time value of the observation variable in each of all the positive samples and all the negative samples. One of the multiple observation variables is determined as the to-be-adjusted variable, where the Gini coefficient of the one of the multiple observation variables is a minimum Gini coefficient among multiple Gini coefficients respectively corresponding to the multiple observation variables. The judgment threshold of the to-be-adjusted variable is adjusted to the split value corresponding to the to-be-adjusted variable.

The decision tree model is updated according to the judgment threshold adjusted.

In this way, the threshold optimization of a collection phase of the base station energy-saving scenario is completed.

Embodiments of the disclosure provide a threshold optimization device for a communication system. The device includes at least one processor and a storage device configured to store one or more programs. The one or more programs, when executed by the at least one processor, cause the at least one processor to perform any method described above.

Embodiments of the disclosure provide a computer-readable medium. The computer-readable medium stores computer programs. The computer programs, when executed by a processor, cause the processor to perform any method described above.

Implementing embodiments of the disclosure has following beneficial effects. The embodiments of the present disclosure provide a threshold optimization method and device for a communication system, which can enable each threshold configured in the system to intelligently and gradually approach the ideal value according to the real-time situation of the communication system without depending on offline training and global probing, and perform on-line dynamic optimization adjustment of the threshold on the premise of controllable influence on the KPI of the communication system.

One of ordinary skill in the art will appreciate that all or some of the steps in the method disclosed above, functional modules/units in the apparatus/device may be implemented as software, firmware, hardware, or an appropriate combination thereof. In hardware embodiments, the division between functional modules/units mentioned in the above description does not necessarily correspond to the division of physical components. For example, one physical component may have multiple functions or a function or step may be performed cooperatively by several physical components. Some of or all the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on the computer-readable medium. The computer-readable medium may include a computer storage medium (or non-transitory medium) and a communication medium (or transitory medium). As is well known to those of ordinary skill in the art, the term "computer storage medium" includes transitory and non-transitory, removable, and non-removable medium implemented in any method or technique for storing information, such as computer-readable instructions, data structures, program modules, or other data. The computer storage medium may include, but is not limited to, a random-access memory (RAM), a read-only memory (ROM), an electrically erasable programmable ROM (EEPROM), a flash memory, or other memory technologies, a compact disc ROM (CD-ROM), a digital versatile disk (DVD), or other optical disk storage, a magnetic box, a magnetic tape, a magnetic disk storage, or other magnetic storage devices, or any other media that may be used to store desired information and may be accessed by a computer. In addition, it is well known to those of ordinary skill in the art that the communication medium typically stores computer readable instructions, data structures, program modules, or other data in modulated data signals such as carrier waves or other transmission mechanisms, and may include any information delivery medium.

Example embodiments have been disclosed herein, and although specific terms are employed, they are used and should only be construed in a general descriptive sense and not for purposes of limitation. In some instances, it will be apparent to those skilled in the art that features, characteristics, and/or elements described in a particular embodiment may be used alone or may be used in combination with features and/or elements in other embodiments, unless expressly stated otherwise.

## Claims

1. A threshold optimization method for a communication system, comprising:

   performing following operations at a preset time interval, in response to a start of a collection phase:

   collecting (S1) a real-time value of each of a plurality of observation variables of the communication system to obtain a set of collection data;
   in response to the real-time value of each of the plurality of observation variables falling within a corresponding valid range: controlling (S2) the communication system to perform a preset operation and acquiring a value of a key performance indicator, KPI, of performing the preset operation by the communication system, wherein each of the plurality of observation variables is configured with a corresponding judgment threshold, and a respective judgment threshold is used for dividing a range of a corresponding observation variable into a valid range and a non-valid range; and marking (S3) the set of collection data according to the value of the KPI; and

adjusting (S4) the judgment threshold configured for each of at least one of the plurality of observation variables according to marked collection data obtained in the collection phase, in response to an end of the collection phase; wherein marking the set of collection data according to the value of the KPI comprises:

marking the set of collection data as a negative sample, in response to the value of the KPI being less than a preset indicator value; and
marking the set of collection data as a positive sample, in response to the value of the KPI being greater than or equal to the preset indicator value.

2. The method of claim 1, wherein adjusting the judgment threshold configured for each of the at least one of the plurality of observation variables according to the marked collection data obtained in the collection phase comprises:

adjusting (S401b), for each particular observation variable of the plurality of observation variables, the judgment threshold configured for the particular observation variable toward a direction of the non-valid range, in response to all the marked collection data being positive samples; and
in response to some marked collection data being positive samples and remaining marked collection data being negative samples: selecting (S402b) one of the plurality of observation variables as a to-be-adjusted variable and adjusting the judgment threshold configured for the to-be-adjusted variable toward a direction of the valid range.

3. The method of claim 1, wherein adjusting, for each particular observation variable of the plurality of observation variables, the judgment threshold configured for the particular observation variable toward the direction of the non-valid range comprises:

determining (S4011) an exploration step size corresponding to the particular observation variable; and
adjusting (S4012), in the exploration step size, the judgment threshold configured for the particular observation variable toward the direction of the non-valid range.

4. The method of claim 3, wherein the communication system comprises an energy-saving cell and an underlying coverage cell, wherein
the preset operation comprises shielding the energy-saving cell.

5. The method of claim 4, wherein determining the exploration step size corresponding to the particular observation variable comprises:
obtaining the exploration step size corresponding to the particular observation variable in the collection phase by calculating according to an exploration step size corresponding to the particular observation variable in a previous collection phase and a step size coefficient corresponding to the particular observation variable in the collection phase.

6. The method of claim 5, comprising:
calculating the step size coefficient corresponding to the particular observation variable in the collection phase according to an uplink bandwidth of the underlying coverage cell, a maximum uplink load of the underlying coverage cell in response to the energy-saving cell being shielded in the previous collection phase, and the larger of two maximum uplink loads of the underlying coverage cell in response to the energy-saving cell being shielded in two collection phases prior to the collection phase.

7. The method of claim 2, wherein selecting the one of the plurality of observation variables as the to-be-adjusted variable and adjusting the judgment threshold configured for the to-be-adjusted variable toward the direction of the valid range comprises:

calculating (S4021), for each particular observation variable of the plurality of observation variables, a split value and a Gini coefficient corresponding to the particular observation variable according to a corresponding real-time value of the particular observation variable in each of all the positive samples and all the negative samples by using a classification and regression tree, CART, algorithm, to obtain a plurality of split values and a plurality of Gini coefficients;
determining (S422) the one of the plurality of observation variables as the to-be-adjusted variable, wherein the Gini coefficient of the one of the plurality of observation variables is a minimum Gini coefficient among the plurality of Gini coefficients; and
adjusting (S4023) the judgment threshold configured for the to-be-adjusted variable to the split value corresponding to the to-be-adjusted variable.

8. The method of claim 1, further comprising:
prior to the start of the collection phase.
generating (S00) a decision tree model according to the respective judgment threshold configured for the corresponding observation variable; wherein a decision tree in the decision tree model comprises: a plurality of non-leaf nodes distributed in at least one layer and leaf nodes located at a lowest layer of the decision tree, wherein all non-leaf nodes in a same layer of the at least one layer correspond to a same observation variable, a respective non-leaf node of the plurality of non-leaf nodes is configured with two branches according to the judgment threshold of an observation variable corresponding to the respective non-leaf node, one of the two branches corresponds to the valid range of the observation variable corresponding to the respective non-leaf node, and another of the two branches corresponds to the non-valid range of the observation variable corresponding to the respective non-leaf node.

9. The method of claim 8, wherein the real-time value of each of the plurality of observation variables falling within a corresponding valid range is determined, in response to a leaf node in a processing result being a specific leaf node, wherein the specific leaf node is a leaf node on a path covering a branch corresponding to the valid range of each of the plurality of observation variables, and the processing result is obtained by inputting the set of collection data into the decision tree mode.

10. The method of claim 8, wherein the collection phase being ended is determined in response to a cumulative number of specific leaf nodes reaching a cumulative threshold; wherein the cumulative number of the specific leaf nodes is determined according to processing results output from the decision tree model in at least two preset time intervals.

11. The method of claim 8, further comprising: after adjusting the judgment threshold configured for each of the at least one of the plurality of observation variables according to the marked collection data obtained in the collection phase, updating (S5) the decision tree model according to an adjusted judgment threshold configured for each of the at least one of the plurality of observation variables.

12. A threshold optimization device for a communication system, comprising:

at least one processor; and
a storage device configured to store one or more programs, wherein the one or more programs, when executed by the at least one processor, cause the at least one processor to perform the method of any of claims 1 to 11.

13. A computer-readable medium, configured to store computer programs, wherein the computer programs, when executed by a processor, cause the processor to perform the method of any of claims 1 to 11.

**Patentansprüche**

1. Schwellenwertoptimierungsverfahren für ein Kommunikationssystem, umfassend:
Durchführen der folgenden Operationen in einem voreingestellten Zeitintervall in Reaktion auf einen Beginn einer Sammelphase:

Sammeln (S1) eines Echtzeitwerts jeder einer Mehrzahl von Beobachtungsvariablen des Kommunikationssystems, um einen Satz von Sammeldaten zu erhalten;
in Reaktion darauf, dass der Echtzeitwert jeder der Mehrzahl von Beobachtungsvariablen in einen entsprechenden gültigen Bereich fällt: Steuern (S2) des Kommunikationssystems zum Durchführen einer voreingestellten Operation und Erfassen eines Werts eines Hauptleistungsindikators, KPI, zum Durchführen der voreingestellten Operation durch das Kommunikationssystem, wobei jede der Mehrzahl von Beobachtungsvariablen mit einem entsprechenden Beurteilungsschwellenwert konfiguriert ist und ein jeweiliger Beurteilungsschwellenwert zum Teilen eines Bereichs einer entsprechenden Beobachtungsvariable in einen gültigen Bereich und einen ungültigen Bereich verwendet wird; und
Kennzeichnen (S3) des Satzes von Sammeldaten gemäß dem Wert des KPI; und
Anpassen (S4) des Beurteilungsschwellenwerts, der für jede von mindestens einer der Mehrzahl von Beobachtungsvariablen konfiguriert ist, gemäß gekennzeichneten Sammeldaten, die in der Sammelphase erhalten werden, in Reaktion auf ein Ende der Sammelphase; wobei das Kennzeichnen des Satzes von Sammeldaten gemäß dem Wert des KPI Folgendes umfasst:

Kennzeichnen des Satzes von Sammeldaten als negative Stichprobe in Reaktion darauf, dass der Wert des KPI kleiner als ein voreingestellter Indikatorwert ist; und
Kennzeichnen des Satzes von Sammeldaten als positive Stichprobe in Reaktion darauf, dass der Wert des KPI größer oder gleich dem voreingestellten Indikatorwert ist.

2. Verfahren nach Anspruch 1, wobei das Anpassen des Beurteilungsschwellenwerts, der für jede der mindestens einen der Mehrzahl von Beobachtungsvariablen konfiguriert ist, gemäß den in der Sammelphase erhaltenen gekennzeichneten Sammeldaten Folgendes umfasst:

Anpassen (S401b), für jede spezifische Beobachtungsvariable der Mehrzahl von Beobachtungsvariablen, des Beurteilungsschwellenwerts, der für die spezifische Beobachtungsvariable konfiguriert ist, in Richtung des ungültigen Bereichs in Reaktion darauf, dass alle gekennzeichneten Sammeldaten positive Stichproben sind; und

in Reaktion darauf, dass einige gekennzeichnete Sammeldaten positive Stichproben sind und die übrigen gekennzeichneten Sammeldaten negative Stichproben sind: Auswählen (S402b) einer der Mehrzahl von Beobachtungsvariablen als anzupassende Variable und Anpassen des Beurteilungsschwellenwerts, der für die anzupassende Variable konfiguriert ist, in Richtung des gültigen Bereichs.

3. Verfahren nach Anspruch 1, wobei das Anpassen des Beurteilungsschwellenwerts, der für die spezifische Beobachtungsvariable konfiguriert ist, in Richtung des ungültigen Bereichs für jede spezifische Beobachtungsvariable der Mehrzahl von Beobachtungsvariablen Folgendes umfasst:

Bestimmen (S4011) einer Explorationsschrittgröße, die der spezifischen Beobachtungsvariable entspricht; und

Anpassen (S4012) des Beurteilungsschwellenwerts, der für die spezifische Beobachtungsvariable konfiguriert ist, in der Explorationsschrittgröße in Richtung des ungültigen Bereichs.

4. Verfahren nach Anspruch 3, wobei das Kommunikationssystem eine Energiesparzelle und eine zugrundeliegende Abdeckungszelle umfasst, wobei die voreingestellte Operation Abschirmen der Energiesparzelle umfasst.

5. Verfahren nach Anspruch 4, wobei das Bestimmen der Explorationsschrittgröße, die der spezifischen Beobachtungsvariable entspricht, Folgendes umfasst:
Erhalten der Explorationsschrittgröße, die der spezifischen Beobachtungsvariable in der Sammelphase entspricht, durch Berechnen gemäß einer Explorationsschrittgröße, die der spezifischen Beobachtungsvariable in einer vorherigen Sammelphase entspricht, und einem Schrittgrößenkoeffizienten, der der spezifischen Beobachtungsvariable in der Sammelphase entspricht.

6. Verfahren nach Anspruch 5, umfassend:

Berechnen des Schrittgrößenkoeffizienten, der der spezifischen Beobachtungsvariable in der Sammelphase entspricht, gemäß einer Uplink-Bandbreite der zugrundeliegenden Abdeckungszelle, einer maximalen Uplink-Last der zugrundeliegenden Abdeckungszelle in Reaktion darauf, dass die Energiesparzelle in der vorherigen Sammelphase abgeschirmt wird, und der größeren von zwei maximalen Uplink-Lasten der zugrundeliegenden Abdeckungszelle in Reaktion darauf, dass die Energiesparzelle in zwei Sammelphasen vor der Sammelphase abgeschirmt wird.

7. Verfahren nach Anspruch 2, wobei das Auswählen der einen der Mehrzahl von Beobachtungsvariablen als anzupassende Variable und das Anpassen des Beurteilungsschwellenwerts, der für die anzupassende Variable konfiguriert ist, in Richtung des gültigen Bereichs Folgendes umfasst:

Berechnen (S4021) eines Aufteilungswerts und eines Gini-Koeffizienten, die der spezifischen Beobachtungsvariable entsprechen, für jede spezifische Beobachtungsvariable der Mehrzahl von Beobachtungsvariablen gemäß einem entsprechenden Echtzeitwert der spezifischen Beobachtungsvariable in jeder von allen positiven Stichproben und allen negativen Stichproben durch Verwenden eines Klassifizierungs- und Regressionsbaumalgorithmus, CART- Algorithmus, um eine Mehrzahl von Aufteilungswerten und eine Mehrzahl von Gini-Koeffizienten zu erhalten;

Bestimmen (S422) der einen der Mehrzahl von Beobachtungsvariablen als die anzupassende Variable, wobei der Gini-Koeffizient der einen der Mehrzahl von Beobachtungsvariablen ein minimaler Gini-Koeffizient unter der Mehrzahl von Gini-Koeffizienten ist; und

Anpassen (S4023) des Beurteilungsschwellenwerts, der für die anzupassende Variable konfiguriert ist, an den Aufteilungswert, der der anzupassenden Variable entspricht.

8. Verfahren nach Anspruch 1, ferner umfassend:

vor Beginn der Sammelphase
Erstellen (S00) eines Entscheidungsbaummodells gemäß dem jeweiligen Beurteilungsschwellenwert, der für die entsprechende Beobachtungsvariable konfiguriert ist;
wobei ein Entscheidungsbaum in dem Entscheidungsbaummodell Folgendes umfasst: eine Mehrzahl von Nicht-Blattknoten, die in mindestens einer Schicht verteilt sind, und Blattknoten, die sich auf einer niedrigsten Schicht des Entscheidungsbaums befinden, wobei alle Nicht-Blattknoten in einer gleichen Schicht der mindestens einen Schicht einer gleichen Beobachtungsvariable entsprechen, ein jeweiliger Nicht-Blattknoten der Mehrzahl von Nicht-Blattknoten mit zwei Zweigen gemäß dem Beurteilungsschwellenwert einer Beobachtungsvariable konfiguriert ist, die dem jeweiligen Nicht-Blattknoten entspricht, einer der beiden Zweige dem gültigen Bereich der Beobachtungsvariable entspricht, die dem jeweiligen Nicht-Blattknoten entspricht, und ein anderer der beiden Zweige dem ungültigen Bereich der Beobachtungsvariable entspricht, die dem jeweiligen Nicht-Blattknoten entspricht.

9. Verfahren nach Anspruch 8, wobei der Echtzeitwert jeder der Mehrzahl von Beobachtungsvariablen, die in einen entsprechenden gültigen Bereich fallen, in Reaktion darauf bestimmt wird, dass ein Blattknoten in einem Verarbeitungsergebnis ein spezifischer Blattknoten ist, wobei der konkrete Blattknoten ein Blattknoten auf einem Pfad ist, der einen Zweig abdeckt, der dem gültigen Bereich jeder der Mehrzahl von Beobachtungsvariablen entspricht, und das Verarbeitungsergebnis durch Eingeben des Satzes von Sammeldaten in den Entscheidungsbaummodus erhalten wird.

10. Verfahren nach Anspruch 8, wobei die Beendigung der Sammelphase in Reaktion darauf bestimmt wird, dass eine kumulative Anzahl konkreter Blattknoten einen kumulativen Schwellenwert erreicht; wobei die kumulative Anzahl der konkreten Blattknoten gemäß Verarbeitungsergebnissen bestimmt wird, die von dem Entscheidungsbaummodell in mindestens zwei voreingestellten Zeitintervallen ausgegeben werden.

11. Verfahren nach Anspruch 8, ferner umfassend: nach dem Anpassen des Beurteilungsschwellenwerts, der für jede der mindestens einen der Mehrzahl von Beobachtungsvariablen konfiguriert ist, gemäß den in der Sammelphase erhaltenen gekennzeichneten Sammeldaten Aktualisieren (S5) des Entscheidungsbaummodells gemäß einem angepassten Beurteilungsschwellenwert, der für jede der mindestens einen der Mehrzahl von Beobachtungsvariablen konfiguriert ist.

12. Schwellenwertoptimierungsvorrichtung für ein Kommunikationssystem, umfassend:

mindestens einen Prozessor; und Speichervorrichtung, die dazu ausgelegt ist, ein oder mehrere Programme zu speichern, wobei das eine oder die mehreren Programme bei Ausführung durch den mindestens einen Prozessor den mindestens einen Prozessor zum Durchführen des Verfahrens nach einem der Ansprüche 1 bis 11 veranlassen.

13. Computerlesbares Medium, das zum Speichern von Computerprogrammen konfiguriert ist, wobei die Computerprogramme bei Ausführung durch einen Prozessor den Prozessor zum Durchführen des Verfahrens nach einem der Ansprüche 1 bis 11 veranlassen.

**Revendications**

1. Procédé d'optimisation de seuil pour un système de communication, comprenant :
l'exécution des opérations suivantes à un intervalle de temps prédéfini, en réponse au début d'une phase de collecte :

la collecte (S1) d'une valeur en temps réel de chacune d'une pluralité de variables d'observation du système de communication pour obtenir un ensemble de données de collecte ;
en réponse au fait que la valeur en temps réel de chacune de la pluralité de variables d'observation se situe dans une plage valide correspondante : la commande (S2) du système de communication pour effectuer une opération prédéfinie et l'acquisition d'une valeur d'un indicateur clé de performance, KPI, de réalisation de l'opération prédéfinie par le système de communication, chacune de la pluralité de variables d'observation étant configurée avec un seuil de jugement correspondant, et un seuil de jugement respectif étant utilisé pour diviser une plage d'une variable d'observation correspondante en une plage valide et une plage non valide ; et
le marquage (S3) de l'ensemble de données de collecte en fonction de la valeur du KPI ; et
l'ajustement (S4) du seuil de jugement configuré pour chaque variable parmi au moins une de la pluralité de variables d'observation, selon des données de collecte marquées obtenues lors de la phase de collecte, en réponse à une fin de la phase de collecte ; le marquage de l'ensemble de données de collecte selon la valeur du KPI comprenant :

le marquage de l'ensemble de données de collecte en tant qu'échantillon négatif, en réponse au fait que la valeur du KPI soit inférieure à une valeur d'indicateur prédéfinie ; et
le marquage de l'ensemble de données de collecte en tant qu'échantillon positif, en réponse au fait que la valeur du KPI soit supérieure ou égale à la valeur d'indicateur prédéfinie.

**2.** Procédé selon la revendication 1, l'ajustement du seuil de jugement configuré pour chacune de la ou des variables de la pluralité de variables d'observation en fonction des données de collecte marquées obtenues dans la phase de collecte, comprenant :

l'ajustement (S401b), pour chaque variable d'observation particulière de la pluralité de variables d'observation, du seuil de jugement configuré pour la variable d'observation considérée en direction de la plage non valide, en réponse au fait que toutes les données de collecte marquées soient des échantillons positifs ; et

en réponse au fait que certaines données de collecte marquées soient des échantillons positifs et que les données de collecte marquées restantes soient des échantillons négatifs : la sélection (S402b) d'une des variables d'observation en tant que variable à ajuster et l'ajustement du seuil de jugement configuré pour la variable à ajuster en direction de la plage valide.

**3.** Procédé selon la revendication 1, l'ajustement, pour chaque variable d'observation particulière de la pluralité de variables d'observation, du seuil de jugement configuré pour la variable d'observation considérée en direction de la plage non valide comprenant :

la détermination (S4011) d'une taille de pas d'exploration correspondant à la variable d'observation considérée ; et
l'ajustement (S4012), avec la taille du pas d'exploration, du seuil de jugement configuré pour la variable d'observation considérée en direction de la plage non valide.

**4.** Procédé selon la revendication 3, le système de communication comprenant une cellule à économie d'énergie et une cellule de couverture sous-jacente, l'opération prédéfinie comprenant la protection de la cellule à économie d'énergie.

**5.** Procédé selon la revendication 4, la détermination de la taille de pas d'exploration qui correspond à la variable d'observation considérée comprenant :
l'obtention de la taille de pas d'exploration qui correspond à la variable d'observation considérée dans la phase de collecte par un calcul d'après une taille de pas d'exploration correspondant à la variable d'observation considérée dans une phase de collecte précédente et un coefficient de taille de pas correspondant à la variable d'observation considérée dans la phase de collecte.

**6.** Procédé selon la revendication 5, comprenant :
le calcul du coefficient de taille de pas correspondant à la variable d'observation considérée dans la phase de collecte en fonction d'une largeur de bande de liaison montante de la cellule de couverture sous-jacente, d'une charge maximale de liaison montante de la cellule de couverture sous-jacente en réponse à la protection de la cellule à économie d'énergie dans la phase de collecte précédente, et de la plus grande parmi deux charges maximales de liaison montante de la cellule de couverture sous-jacente en réponse à la protection de la cellule à économie d'énergie dans deux phases de collecte antérieures à la phase de collecte.

**7.** Procédé selon la revendication 2, la sélection de la variable de la pluralité de variables d'observation en tant que variable à ajuster et l'ajustement du seuil de jugement configuré pour la variable à ajuster en direction de la plage valide comprenant :

le calcul (S4021), pour chaque variable d'observation particulière de la pluralité de variables d'observation, d'une valeur de fractionnement et d'un coefficient de Gini correspondant à la variable d'observation considérée selon une valeur en temps réel correspondante de la variable d'observation considérée dans chacun de tous les échantillons positifs et de tous les échantillons négatifs en utilisant un algorithme d'arbre de classification et de régression, CART, pour obtenir une pluralité de valeurs de division et une pluralité de coefficients de Gini ;
la détermination (S422) de la variable considérée parmi la pluralité de variables d'observation en tant que variable à ajuster, le coefficient de Gini de la variable considérée parmi la pluralité de variables d'observation étant un coefficient de Gini minimum parmi la pluralité de coefficients de Gini ; et
l'ajustement (S4023) du seuil de jugement configuré pour la variable à ajuster à la valeur de fractionnement qui correspond à la variable à ajuster.

**8.** Procédé selon la revendication 1, comprenant en outre :

préalablement au début de la phase de collecte, la génération (S00) d'un modèle d'arbre de décision selon le seuil de jugement respectif configuré pour la variable d'observation correspondante ; un arbre de décision dans le modèle d'arbre de décision comprenant : une pluralité de nœuds non feuilles répartis dans au moins une couche et de nœuds feuilles situés au niveau d'une couche la plus basse de l'arbre de décision, tous les nœuds non feuilles d'une même couche parmi la ou les couches correspondant à une même variable d'observation, un nœud non feuille respectif de la pluralité de nœuds non feuilles étant configuré avec deux branches selon le seuil de jugement d'une variable d'observation correspondant au nœud non feuille en question, l'une des deux branches correspondant à la plage valide de la variable d'observation qui correspond au nœud non feuille respectif, et l'autre des deux branches correspondant à la plage non-valide de la variable d'observation qui correspond au nœud non feuille respectif.

9. Procédé selon la revendication 8, la valeur en temps réel de chacune de la pluralité de variables d'observation se situant à l'intérieur d'une plage valide correspondante étant déterminée, en réponse au fait qu'un nœud feuille dans un résultat de traitement est un nœud feuille spécifique, le nœud feuille spécifique étant un nœud feuille sur un chemin couvrant une branche correspondant à la plage valide de chacune de la pluralité de variables d'observation, et le résultat du traitement étant obtenu en introduisant l'ensemble des données de collecte dans le mode d'arbre de décision.

10. Procédé selon la revendication 8, la fin de la phase de collecte étant déterminée en réponse au fait qu'un nombre cumulé de nœuds feuilles spécifiques atteigne un seuil cumulé ;
le nombre cumulé des nœuds feuilles spécifiques étant déterminé en fonction de résultats de traitement délivrés à partir du modèle d'arbre de décision dans au moins deux intervalles de temps prédéfinis.

11. Procédé selon la revendication 8, comprenant en outre :
après l'ajustement du seuil de jugement configuré pour chacune de la ou des variables de la pluralité de variables d'observation en fonction des données de collecte marquées obtenues lors de la phase de collecte, la mise à jour (S5) du modèle d'arbre de décision selon un seuil de jugement ajusté configuré pour chacune de la ou des variables de la pluralité de variables d'observation.

12. Dispositif d'optimisation de seuil pour un système de communication, comprenant :

au moins un processeur ; et
un dispositif de stockage configuré pour stocker un ou plusieurs programmes, le ou les programmes, lorsqu'ils sont exécutés par le ou les processeurs, amenant le ou les processeurs à réaliser le procédé selon l'une quelconque des revendications 1 à 11.

13. Support lisible par ordinateur, configuré pour stocker des programmes informatiques, les programmes informatiques, lorsqu'ils sont exécutés par un processeur, amenant le processeur à réaliser le procédé selon l'une quelconque des revendications 1 à 11.

Collect a real-time value of each of a plurality of observation variables of the communication system to obtain a set of collection data — S1

Control the communication system to perform a preset operation and acquiring a value of a KPI of performing the preset operation by the communication system, in response to the real-time value of each of the plurality of observation variables falling within a corresponding valid range — S2

Mark the set of collection data according to the value of the KPI — S3

Adjust the judgment threshold configured for each of at least one of the plurality of observation variables according to marked collection data obtained in the collection phase, in response to an end of the collection phase — S4

FIG. 1

Collect a real-time value of each of a plurality of observation variables of the communication system to obtain a set of collection data — S1

Whether the real-time value of each of the plurality of observation variables falls within a corresponding valid range? — S201a

N

Y

Control the communication system to perform a preset operation and acquire a value of a KPI of performing the preset operation by the communication system — S2

Mark the set of collection data according to the value of the KPI — S3

Whether the collection phase is ended?

N

Y

Adjust the judgment threshold configured for each of at least one of the plurality of observation variables according to marked collection data obtained in the collection phase — S4

FIG. 2

Generate a decision tree model according to the respective judgment threshold configured for the corresponding observation variable — S00

Collect a real-time value of each of a plurality of observation variables of the communication system to obtain a set of collection data — S1

N ◄ Input the set of collection data into the decision tree mode to obtain a processing result, and determine whether a leaf node in the processing result is a specific leaf node? — S201b

Y

Control the communication system to perform a preset operation and acquire a value of a KPI of performing the preset operation by the communication system — S2

Mark the set of collection data according to the value of the KPI — S3

Determine a cumulative number of specific leaf nodes in processing results output from the decision tree model — S401a

N ◄ Whether the cumulative number of the specific leaf nodes reaches a cumulative threshold? — S402a

Y

Adjust the judgment threshold configured for each of at least one of the plurality of observation variables according to marked collection data obtained in the collection phase — S4

Update the decision tree model according to an adjusted judgment threshold configured for each of the at least one of the plurality of observation variables — S5

FIG. 3a

A root node corresponds to a first variable, and a left branch of the root node corresponds to a valid range of the first variable

All non-leaf nodes in a second layer correspond to a second variable, all left branches and all right branches in the second layer respectively correspond to a valid range and a non-valid range of the second variable

All non-leaf nodes in a third layer correspond to a third variable, all non-leaf nodes in a fourth layer correspond to a fourth variable, and for a corresponding relation in each branch, reference may be made to the second layer

A leftmost leaf node in a last layer is a specific leaf node

FIG. 3b

```
┌─────────────────────────────────────────────┐
│  Collect a real-time value of each of a      │
│  plurality of observation variables of the   │──── S1
│  communication system to obtain a set of     │
│  collection data                             │
└─────────────────────────────────────────────┘
                        │
                        ▼
          ┌─────────────────────────────────┐
    N     │  Whether the real-time value of  │
◄─────────│  each of the multiple observation│──── S201a
          │  variables falls within a        │
          │  corresponding valid range?      │
          └─────────────────────────────────┘
                        │ Y
                        ▼
┌─────────────────────────────────────────────┐
│  Control the communication system to perform │
│  a preset operation and acquire a value of a │──── S2
│  KPI of performing the preset operation by   │
│  the communication system                    │
└─────────────────────────────────────────────┘
                        │
                        ▼
┌─────────────────────────────────────────────┐
│  Mark the set of collection data according   │──── S3
│  to the value of the KPI                     │
└─────────────────────────────────────────────┘
                        │
                        ▼
    N     ┌─────────────────────────────────┐
◄─────────│  Whether the collection phase    │
          │  is ended?                       │
          └─────────────────────────────────┘
                        │ Y
                        ▼
┌─────────────────────────────────────────────┐
│  Adjust the judgment threshold configured    │
│  for each observation variable toward a      │──── S401b
│  direction of the non-valid range, when all  │
│  the marked collection data are positive     │
│  samples                                     │
└─────────────────────────────────────────────┘
                        │
                        ▼
┌─────────────────────────────────────────────┐
│  Select one of the multiple observation      │
│  variables as a to-be-adjusted variable and  │
│  adjust the judgment threshold of the to-be- │──── S402b
│  adjusted variable toward a direction of the │
│  valid range, when some marked collection    │
│  data are positive samples and remaining     │
│  marked collection data are negative samples │
└─────────────────────────────────────────────┘
```

FIG. 4

Determine an exploration step size corresponding to each observation variable ⟋ S4011

For each observation variable, adjust the judgment threshold configured for the observation variable, in the corresponding exploration step size, toward the direction of the non-valid range ⟋ S4012

FIG. 5

Calculate, for each observation variable of the multiple observation variables, a split value and a Gini coefficient corresponding to the observation variable according to a corresponding real-time value of the observation variable in each of all the positive samples and all the negative samples by using a CART algorithm, to obtain multiple split values and multiple Gini coefficients ⟋ S4021

Determine the one of the plurality of observation variables as the to-be-adjusted variable, where the Gini coefficient of the one of the plurality of observation variables is a minimum Gini coefficient among the multiple Gini coefficients ⟋ S4022

Adjust the judgment threshold configured for the to-be-adjusted variable to the split value corresponding to the to-be-adjusted variable ⟋ S4023

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016165469 A1

- JP 2006287601 A